Europäisches Patentamt

European Patent Office

Office européen des brevets

(19)

(11) Veröffentlichungsnummer: **0 313 999 B1**

## (12) EUROPÄISCHE PATENTSCHRIFT

(45) Veröffentlichungstag der Patentschrift: **29.07.92**

(21) Anmeldenummer: **88117525.1**

(22) Anmeldetag: **21.10.88**

(51) Int. Cl.⁵: **G01L 3/12**, G01L 3/10

----

(54) Vorrichtung zur Messung des Drehmomentes einer Arbeitswelle.

----

(30) Priorität: **28.10.87 DE 3736533**

(43) Veröffentlichungstag der Anmeldung:
**03.05.89 Patentblatt 89/18**

(45) Bekanntmachung des Hinweises auf die
Patenterteilung:
**29.07.92 Patentblatt 92/31**

(84) Benannte Vertragsstaaten:
**DE FR GB IT**

(56) Entgegenhaltungen:
**DE-A- 2 118 722**
**DE-B- 2 811 809**
**US-A- 3 871 215**

**PATENT ABSTRACTS OF JAPAN, Band 8, Nr.
169 (P-292)[1606], 4. August 1984; & JP-A-59
65 738 (ONO SOTSUKI K.K.) 14-04-1984**

(73) Patentinhaber: **Rohs, Ulrich, Dr.-Ing.
Roonstrasse 11
W-5160 Düren(DE)**

(72) Erfinder: **Rohs, Ulrich, Dr.-Ing.
Roonstrasse 11
W-5160 Düren(DE)**
Erfinder: **Meuter, Herbert, Dipl.-Ing.
An der Weingass 24
W-5100 Aachen(DE)**
Erfinder: **Voigt, Dieter, Dr.-Ing.
Parkstrasse 70
W-5100 Aachen(DE)**

(74) Vertreter: **Rauh, Wolfgang K., Dipl.-Ing. Patentanwalt
Mittelstrasse 55
W-5100 Aachen(DE)**

## Beschreibung

Die Erfindung betrifft eine Vorrichtung zur Messung des Drehmomentes einer kraftübertragenden Arbeitswelle wobei auf der Arbeitswelle mit axialem Abstand voneinander zwei mit der Arbeitswelle umlaufende Meßscheiben angeordnet sind, die jeweils eine Vielzahl gleichmäßig verteilter Impulsgeber tragen, deren Anzahl unterschiedlich sein kann, und jeder Meßscheibe eine Sensoreinrichtung zugeordnet ist, die die Impulsgeber mit Energieflußbündeln beaufschlagt, die auf jeweils hinter der Meßscheibe angeordneten Empfängereinrichtungen der Sensoreinrichtung auftreffen und Spannungsimpulse erzeugen und wobei ferner die Ausgänge der Empfängereinrichtungen mit einer elektronischen Vergleichseinrichtung verbunden sind, die eine digitale und/oder analoge Ausgabe aufweist.

Eine solche Vorrichtung ist aus der DE-AS 28 11 809 bekannt. Mit ihr lassen sich kleine Verdrehwinkel und damit die Torsion einer sich drehenden Welle erfassen. Eine solche Vorrichtung eignet sich zur unmittelbaren Drehmomentenmessung bei kraftübertragenden Arbeitswellen.

Es hat sich jedoch gezeigt, daß die Genauigkeit der Messung und die Abgrenzung der einzelnen Meßwerte nicht deutlich genug ist, insbesondere sich Schwierigkeiten mangels Eindeutigkeit in ihrer elektronischen Erfassung ergeben, wenn eine solche Vorrichtung zur Bestimmung der Drehschwingungen und Leistung in einem Fahrzeugantrieb verwendet werden soll um z.B. die erforderlichen Motorsteuerungen für bestimmte Lastzustände vorzunehmen.

Es ist daher Aufgabe der Erfindung, die bekannte Vorrichtung so zu verbessern, daß die vorgenannten Mängel vermieden werden.

Die Lösung der gestellten Aufgabe besteht gemäß der Erfindung in den Merkmalen des Anspruches 1.

Würde man die beiden Meßscheiben mit dem axialen Abstand Null aufeinander legen, so ergäbe sich mit jedem Impulsgeber, um den die eine Meßscheibe von der anderen abweicht, jeweils ein Bereich zwischen relativ großer und minimaler Durchlässigkeit. (Noniuseffekt). Würde man durch die Teilkreise mit Impulsgebern z.B. einen Lichtstrahl senden und die Meßscheiben relativ zueinander drehen, so würde der Lichtstrahl periodisch Bereiche unterschiedlicher Helligkeit beaufschlagen. Eine nachgeschaltete Fotozelle würde demgemäß periodisch unterschiedlich hohe Spannungen liefern.

Verdreht man nun die Meßscheiben relativ zueinander, so ergibt sich eine Verschiebung der Abstände zwischen den Maxima bzw. Minima der aufgefangenen Lichtintensität und damit ein Maß für den Drehwinkel, der durch die Belastung mit einem bestimmten Drehmoment gegeben ist. Je größer der axiale Abstand zwischen zwei Meßscheiben ist, desto größer wird die Genauigkeit der Messung. Eine weitere Steigerung der Genauigkeit erzielt man nun, wenn man erfindungsgemäß jede Meßscheibe mit zwei Teilkreisen mit Impulsgebern anstelle eines einzigen Teilkreises versieht und den Teilkreisen jeder Meßscheibe eine unterschiedliche Anzahl Impulsgeber zuordnet. Hierdurch wird gewissermaßen der oben erwähnte "Nonius-Effekt" verdoppelt, was letztlich eine Maßstabsvergrößerung bedeutet.

Da in der Praxis die Verwendung von Lichtstrahlen nicht ausreicht, sieht die Erfindung vor, jedem Teilkreis einer Meßscheibe eine Sensoreinrichtung zuzuordnen, deren Ausgänge synchron in einer elektronischen Vergleichseinrichtung ausgewertet werden. Diese zeigt dann die Verschiebung der Maxima und Minima, z.B. in der Form mehr oder weniger langer Rechteckimpulse an, die wiederum ein Maß für das gemessene Drehmoment sind.

Weitere Ausgestaltungen der Erfindung sind in den Unteransprüchen angegeben.

Mit der erfindungsgemäßen Vorrichtung lassen sich gleichzeitig und ohne zusätzlichen Aufwand die Drehzahl der Abtriebswelle sowie deren periodische Änderungen, d.h. Drehschwingungen bestimmen. Zugleich läßt sich dabei auch die übertragene Leistung ermitteln.

Es ist auch möglich, mittels der Sensoreinrichtungen die Meßimpulse zu zählen und untereinander zu vergleichen. Die hierbei ermittelten Differenzen sind ebenfalls als ein Maß für das auf die Arbeitswelle wirkende Drehmoment darstellbar.

Nachstehend ist die Erfindung anhand von in der Zeichnung dargestellter Ausführungsbeispiele näher erläutert. Es zeigen:

| | |
|---|---|
| Fig.1 | eine schematische Darstellung einer Vorrichtung zur Bestimmung des Drehmoments mit zwei ungleich belegten Meßscheiben, |
| Fig.2 | eine teilweise schematische Darstellung einer Vorrichtung nach Fig.1, jedoch als einheitliches Bauteil, |
| Fig.3 | einen Querschnitt nach der Linie III-III in Fig.2 |
| Fig.4 und 5 | zwei Meßscheiben mit Teilkreisen mit einer jeweils unterschiedlichen Anzahl Impulsgebern, |
| Fig.6 | die beiden Meßscheiben der Fig. 4 und 5 aufeinanderliegend und |
| Fig.7 | ein Anwendungsbeispiel zum Einbau der Vorrichtung bei einem frontgetriebenen Fahrzeug- |

antrieb

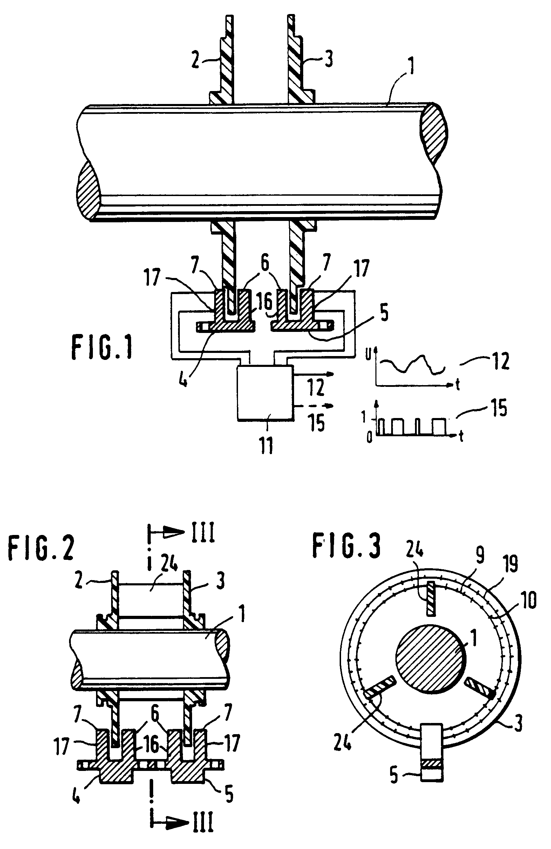

Fig.1 zeigt den grundsätzlichen Aufbau einer Vorrichtung zur Durchführung des erfindungsgemäßen Verfahrens zur Ermittlung des Drehmomentes einer belasteten Arbeitswelle 1.

Danach sitzen auf dieser Arbeitswelle 1 mit axialem Abstand L zwei mit ihr fest verbundene Meßscheiben 2,3. Jeder Meßscheibe 2 bzw. 3 ist eine Sensoreinrichtung 4 bzw.5 zugeordnet, die jeweils aus zwei vor der Meßscheibe 2 bzw.3 angeordneten Sendern 6,16 und zwei axial hinter der Meßscheibe 2 bzw. 3 befindlichen Empfängereinrichtungen 7,17 bestehen. Diese Sensoreinrichtungen 4,5 können als Lichtschranken, induktive oder kapazitive Sensoren ausgebildet sein.

Die Meßscheiben 2,3 weisen auf jeweils zwei konzentrischen inneren und äußeren Teilkreisen 8,18 bzw. 9,19 eine Vielzahl von Impulsgebern 10 auf, die z.B. aus schwarzen radialen Strichen auf einer durchsichtigen Meßscheibe oder aus metallischen Markierungen auf einer Kunststoffscheibe bestehen können, je nachdem, welche Art Sensoreinrichtung verwendet wird.

Die Anzahl der Impulsgeber 10 auf den Teilkreisen 8,18; 9,19 jeder Meßscheibe 2,3 ist verschieden. Auch ist die Anzahl der Impulsgeber 10 auf den miteinander kommunizierenden Teilkreisen 8,9 bzw. 18,19 beider Meßscheiben 2,3 unterschiedlich. Dabei kann die Anzahl der Impulsgeber 10 auf dem äußeren Teilkreis 18 der einen Meßscheibe 2 größer und diejenige des inneren Teilkreises 8 geringer sein, als bei den entsprechenden Teilkreisen 19 und 9 der anderen Meßscheibe 3. Es ist aber auch möglich, die Anzahl der Impulsgeber 10 auf den Teilkreisen 8,18 der Meßscheibe 2 größer als auf denjenigen der anderen Meßscheibe 3 vorzusehen.

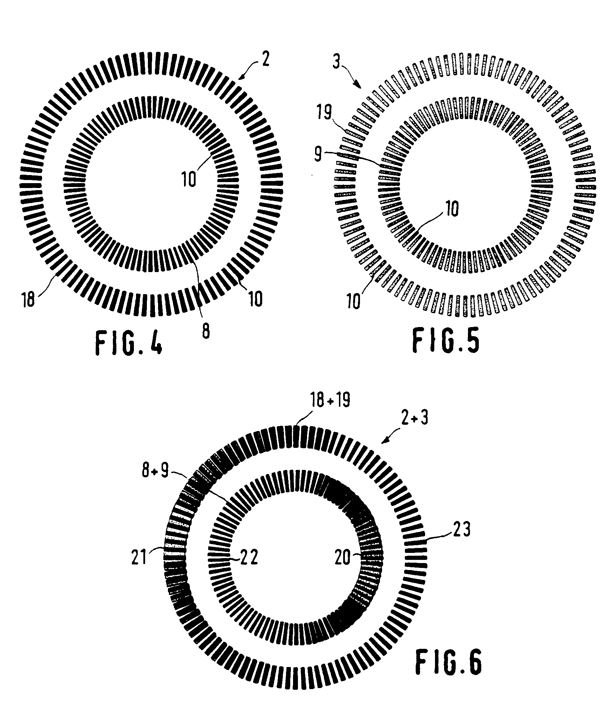

Weist die Meßscheibe 2 beispielsweise, wie in den Fig.4-6 einen inneren Teilkreis 8 mit 91 Impulsgebern 10 und einen äußeren Teilkreis 18 mit 100 Impulsgebern 10 und die Meßscheibe 3 einen inneren Teilkreis 9 mit 88 Impulsgebern 10 und einen äußeren Teilkreis 19 mit 102 Impulsgebern 10 auf, so ergeben sich, würde man die Meßscheiben 2 und 3 wie in Fig. 6 dargestellt, aufeinanderlegen, zwei unterschiedliche Bereiche 20,21 mit minimaler und zwei unterschiedliche Bereiche 22,23 mit maximaler Lichtdurchlässigkeit. Da die Teilkreise 8,9 der beiden Meßscheiben 2,3 jeweils einmal mehr und einmal weniger Impulsgeber 10 als die zugeordneten Teilkreise 9,19 der Meßscheibe 3 aufweisen, wandern diese Bereiche 20,21 bzw. 22,23 bei Verdrehung der Arbeitswelle 1 gegenläufig zueinander um. Ihre Winkellage zueinander läßt sich daher sehr genau aufnehmen und bestimmen.

Die Sender 6 bzw. 16 senden Energieflußbündel (Licht, Magnetfeld, Elektrisches Feld) in axialer Richtung durch die Impulsgeber 10 auf die Empfängereinrichtungen 7 bzw. 17, die jeweils mit einer gemeinsamen elektronischen Vergleichseinrichtung 11 verbunden sind. Diese hat eine analoge Ausgabe 12 und eine digitale Ausgabe 15.

So wie ein gemeinsamer Lichtstrahl durch die Impulsgeber 10 unterschiedliche Durchtrittsquerschnitte vorfindet und damit den Empfänger unterschiedlich stark beeinflussen würde, so ergibt sich die gleiche Bedingung, wenn jeder Meßscheibe 2,3 eine eigene Sensoreinrichtung, 4,5 z.B. Lichtschranke, zugeordnet ist und die von diesen erzeugten Spannungen gleichzeitig der Vergleichseinrichtung 11 zugeführt werden.

Bei einer gegenseitigen Lagenverschiebung der beiden Meßscheiben infolge einer durch das übertragene Drehmoment bewirkten Torsion der Arbeitswelle 1 verschieben sich die undurchlässigen Bereiche 20,21 gegeneinander. Dieses Abstandverhältnis, das digital auch als unterschiedlich lange Impulse meßbar ist, ist ein Maß für das wirkende Drehmoment.

Um beim Einbau der Vorrichtung ein zeitraubendes Ausrichten und Justieren der Meßscheiben 2,3 zu vermeiden, ist es vorteilhaft, die Vorrichtung als einstückiges Bauteil auszubilden. Dabei können, wie die Fig. 2 und 3 zeigen, die Meßscheiben durch elastische Stege 24 oder dgl. fest miteinander verbunden sein.

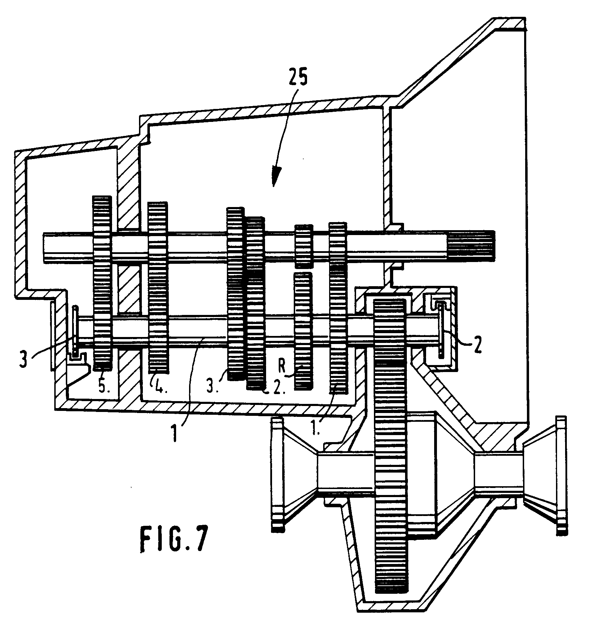

Fig.7 zeigt ein Einbaubeispiel der erfindungsgemäßen Vorrichtung bei einem Fahrzeug-Frontantrieb.

Da bei einer solchen Ausführung die Verdrehlänge der Arbeitswelle sich mit jeder Schaltstufe (Gang) ändert, ergibt sich eine große Bandbreite innerhalb der das Drehmoment gemessen werden kann. Bei kleinen Drehmomenten, d.h. kleinster Übersetzung (5.Gang) liegt eine große Verdrehlänge zwischen der Krafteinleitung und der Kraftableitung von der Arbeitswelle vor. Mit steigender Übersetzung vermindert sich die Verdrehlänge. Bei allen Schaltstufen ergeben sich dann trotz unterschiedlicher Drehmomente etwa gleichgroße Verdrehwinkel. Zur Auswertung wird dann der Vergleichseinrichtung 11 die jeweilige Übersetzungsstufe als Faktor eingegeben.

**Patentansprüche**

1. Vorrichtung zur Messung des Drehmomentes einer kraftübertragenden Arbeitswelle (1), wobei auf der Arbeitswelle (1) mit axialem Abstand voneinander zwei mit der Arbeitswelle (1) umlaufende Meßscheiben (2,3) angeordnet sind, die jeweils eine Vielzahl gleichmäßig verteilter Impulsgeber (10) tragen, deren Anzahl unterscbiedlich sein kann, und jeder Meßscheibe (2,3) eine Sensoreinrichtung (4,5) zugeordnet ist, die die Impulsgeber (10) mit Energieflußbündeln beaufschlagt, die auf jeweils hinter den Meßscheiben (2,3) angeordnete Empfängereinrichtungen (7,17) der Sensoreinrictung (4,5) auftreffen und Spannungsimpulse erzeugen, und wobei ferner die Ausgänge beider Empfängereinrichtungen mit einer gemeinsamen elektronischen Vergleichseinrichtung (11) verbunden sind, die eine digitale (15) und/oder analoge Ausgabe (12) aufweist, **dadurch gekennzeichnet,** daß jede Meßscheibe (2,3) auf zwei konzentrischen Teilkreisen (8,18;9,19) jeweils eine Vielzahl von Impulsgebern (10) aufweist, deren Anzahl sowohl von Teilkreis (8, bzw.9,) zu Teilkreis (18 bzw.19) der einen Meßscheibe (2 bzw.3) als auch von Meßscheibe (2) zu Meßscheibe (3) unterschiedlich ist.

2. Vorrichtung nach Anspruch 1, **dadurch gekennzeichnet,** daß die Anzahl der Impulsgeber (10) auf jedem Teilkreis (8 bzw. 18) der einen Meßscheibe (2) größer ist, als auf den Teilkreisen (9 bzw. 19) der anderen Meßscheibe (3).

3. Vorrichtung nach Anspruch 1 oder 2, **dadurch gekennzeichnet,** daß die Anzahl der Impulsgeber (10) auf dem einen Teilkreis (8 bzw. 18) der einen Meßscheibe (2) größer ist als diejenige auf dem zugeordneten Teilkreis (9 bzw. 19) der anderen Meßscheibe (3) und daß die Anzahl der Impulsgeber (10) auf dem anderen Teilkreis (18 bzw. 8) der einen Meßscheibe (2) kleiner ist, als diejenige auf dem zugeordneten Teilkreis (19 bzw. 9) der anderen Meßscheibe (3).

4. Vorrichtung nach einem der Ansprüche 1 bis 3, **dadurch gekennzeichnet,** daß die Meßscheibe (2 bzw. 3) mit einer gegenüber der anderen Meßscheibe (3 bzw. 2) kleineren Anzahl Impulsgebern (10) auf einem Teilkreis (8,18 bzw. 9,19) eine extrem geringe Anzahl Impulsgeber aufweist.

5. Vorrichtung nach einem der Ansprüche 1 bis 4, **dadurch gekennzeichnet,** daß die Meßscheiben (2,3) durch elastische Stege (24) oder dgl. miteinander fest verbunden sind und ein einstückiges Bauteil bilden.

6. Vorrichtung nach einem der Ansprüche 1 bis 5, **dadurch gekennzeichnet,** daß die Sensoreinrichtungen (4,5) als Lichtschranken ausgebildet sind.

7. Vorrichtung nach Anspruch 1 oder 5, **dadurch gekennzeichnet,** daß die Sensoreinrichtungen (4,5) ein auf induktiven Empfängereinrichtungen wirkendes elektromagnetisches Feld aussenden.

8. Vorrichtung nach einem der Ansprüche 1 bis 5, **dadurch gekennzeichnet,** daß die Sensoreinrichtungen (4,5) ein auf kapazitive Empfängereinrichtungen wirkendes elektrisches Feld aussenden.

9. Vorrichtung nach einem der Ansprüche 1 bis 8, **dadurch gekennzeichnet,** daß die Empfängereinrichtungen (7,17) Zähleinrichtungen aufweisen.

10. Vorrichtung nach einem der Ansprüche 1 bis 9, **dadurch gekennzeichnet,** daß beim Einbau in einem Getriebe (25) für einen Fahrzeug-Antrieb oder dgl. die eine Meßscheibe (2) am Beginn und die andere Meßscheibe (3) am Ende der Arbeitswelle (1) angeordnet sind.

**Claims**

1. Arrangement for measuring the torque of a power-transmitting operating shaft (1), two measuring discs (2, 3) being disposed on the operating shaft (1) with an axial spacing from one another and rotating with the operating shaft (1), each measuring disc being provided with a plurality of uniformly distributed pulse generators (10), the number of which may be variable, and each measuring disc (2, 3) has associated therewith a sensor means (4, 5), which acts on the pulse generators (10) with energy flow bundles, which impinge upon receiver means (7, 17) of the sensor means (4, 5) and produce voltage pulses, said receiver means being disposed behind the respective measuring discs (2, 3), and, in addition, the outputs of both receiver means are connected to a common electronic comparator (11), which has a digital readout (15) and/or an analog readout (12), characterised in that each measuring disc (2, 3) has, on two concentric graduated circles (8, 18; 9, 19), a plurality of pulse generators (10), the number of which varies both from graduated circle (8 or 9) to graduated circle (18 or 19) of one measuring disc (2 or 3) and from measuring disc (2) to measuring disc (3).

2. Arrangement according to claim 1, characterised in that the number of pulse generators (10) on each graduated circle (8 or 18) of one measuring disc (2) is greater than on the graduated circles (9 and 19 respectively) of the other measuring disc (3).

3. Arrangement according to claim 1 or 2, characterised in that the number of pulse generators (10) on one graduated circle (8 or 18) of one measuring disc (2) is greater than that on the associated graduated circle (9 or 19) of the other measuring disc (3), and in that the number of pulse generators (10) on the other graduated circle (18 or 8) of one measuring disc (2) is smaller than that on the associated graduated circle (19 or 9) of the other measuring disc (3).

4. Arrangement according to one of claims 1 to 3, chaacterised in that the measuring disc (2 or 3) with a smaller number of pulse generators (10) on a graduated circle (8, 18 or 9, 19) than the other measuring disc (3 or 2) has an extremely small number of pulse generators.

5. Arrangement according to one of claims 1 to 4, characterised in that the measuring discs (2, 3) are securely interconnected by means of resilient webs (24) or the like and form an integral component part.

6. Arrangement according to one of claims 1 to 5, characterised in that the sensor means (4, 5) are light barriers.

7. Arrangement according to claim 1 or 5, characterised in that the sensor means (4, 5) transmit an electromagnetic field, which acts on inductive receiver means.

8. Arrangement according to one of claims 1 to 5, characterised in that the sensor means (4, 5) transmit an electric field, which acts on capacitive receiver means.

9. Arrangement according to one of claims 1 to 8, characterised in that the receiver means (7, 17) have counting means.

10. Arrangement according to one of claims 1 to 9, characterised in that, if installed in a gear unit (25) for a vehicle drive or the like, one measuring disc (2) is disposed at the beginning of the operating shaft (1), and the other measuring disc (3) is disposed at the end of said operating shaft.

**Revendications**

1. Dispositif de mesure du couple d'un arbre de travail (1) transmettant une force et sur lequel sont montés à distance l'un de l'autre, deux disques de mesure (2, 3) tournant avec l'arbre de travail (1) et portant chacun un grand nombre d'éléments générateurs d'impulsions (10) répartis régulièrement, dont le nombre peut être différent, un dispositif de détection (4, 5) étant associé à chacun des disques de mesure (2, 3) et soumettant les éléments générateurs d'impulsions (10) à des faisceaux énergétiques dont l'impact se fait sur des dispositifs récepteurs (7, 17), du dispositif de détection (4, 5), disposés respectivement derrière les disques de mesure (2, 3), et qui engendrent des impulsions de tension, et les sorties des deux dispositifs récepteurs étant reliées à un dispositif électronique de comparaison (11) commun, qui comporte une sortie digitale (15) et/ou analogique(12), caractérisé en ce que chaque disque de mesure (2, 3) comporte respectivement sur deux cercles de division (8, 18; 9, 19) concentriques, un grand nombre d'éléments générateurs d'impulsions (10), dont le nombre est différent aussi bien entre le cercle de division (8, respectivement 9) et le cercle de division (18, respectivement 19) sur un disque de mesure (2, respectivement 3), qu'entre le disque de mesure (2) et le disque de mesure (3).

2. Dispositif selon la revendication 1, caractérisé en ce que le nombre des éléments générateurs d'impulsions (10) sur chaque cercle de division (8 et 18) d'un disque de mesure (2) est supérieur à celui des cercles de division respectifs (9 et 19) sur l'autre disque de mesure (3).

3. Dispositif selon la revendication 1 ou 2, caractérisé en ce que le nombre des éléments générateurs d'impulsions (10) sur un cercle de division (8 et 18) d'un disque de mesure (2) est supérieur à celui du cercle de division respectivement associé (9 et 19) de l'autre disque de mesure (3), et en ce que le nombre des éléments générateurs d'impulsions (10) sur l'autre cercle de division (18 et 8) d'un disque de mesure (2) est inférieur à celui du cercle de division respectivement associé (9 et 19) de l'autre disque de mesure (3).

4. Dispositif selon l'une des revendications 1 à 3, caractérisé en ce que le disque de mesure (2 respectivement 3) comportant un nombre d'éléments générateurs d'impulsions (10) plus petit par rapport à celui de l'autre disque de mesure (3 respectivement 2), présente sur un cercle de division (8, 18 et respectivement 9, 19), un nombre d'éléments générateurs d'impulsions (10) extrêmement faible.

5. Dispositif selon l'une des revendications 1 à 4, caractérisé en ce que les disques de mesure (2, 3) sont reliés de manière fixe l'un à l'autre, au moyen de nervures élastiques (24) ou analogues, et forment une pièce d'un seul tenant.

6. Dispositif selon l'une des revendications 1 à 5, caractérisé en ce que les dispositifs de détection (4, 5) sont réalisés sous la forme de barrières photoélectriques.

7. Dispositif selon la revendication 1 ou 5, caractérisé en ce que les dispositifs de détection (4, 5) émettent un champ électromagnétique agissant sur des dispositifs récepteurs inductifs.

8. Dispositif selon l'une des revendications 1 à 5, caractérisé en ce que les dispositifs de détection (4, 5) émettent un champ électrique agissant sur des dispositifs récepteurs capacitifs.

9. Dispositif selon l'une des revendications 1 à 8, caractérisé en ce que les dispositifs récepteurs (7, 17) comportent des dispositifs de comptage.

10. Dispositif selon l'une des revendications 1 à 9, caractérisé en ce que dans le cas d'un montage dans une transmission (25) pour un entrainement de véhicule ou analogue, l'un des disques de mesure (2) est disposé au début et l'autre disque de mesure (3) à la fin de l'arbre de travail (1).

FIG.1

FIG.2

FIG.3

FIG. 4

FIG.5

FIG.6

FIG.7